(19) Europäisches Patentamt

European Patent Office

Office européen des brevets

(11) **EP 1 296 900 B1**

(12) **FASCICULE DE BREVET EUROPEEN**

(45) Date de publication et mention
de la délivrance du brevet:
**15.06.2005 Bulletin 2005/24**

(51) Int Cl.⁷: **C03C 3/087**, C03C 4/02

(21) Numéro de dépôt: **01945278.8**

(86) Numéro de dépôt international:
**PCT/EP2001/006861**

(22) Date de dépôt: **14.06.2001**

(87) Numéro de publication internationale:
**WO 2001/098221 (27.12.2001 Gazette 2001/52)**

(54) **VERRE SODO-CALCIQUE COLORE**

FARBIGES KALKNATRONGLAS

COLOURED SODA-LIME GLASS

(84) Etats contractants désignés:
**AT BE CH CY DE DK ES FI FR GB GR IE IT LI LU
MC NL PT SE TR**

(30) Priorité: **19.06.2000 EP 00202125**

(43) Date de publication de la demande:
**02.04.2003 Bulletin 2003/14**

(73) Titulaire: **GLAVERBEL
1170 Bruxelles (BE)**

(72) Inventeurs:
• **FOGUENNE, Marc
B-6040 Jumet (BE)**
• **COSTER, Dominique
B-6040 Jumet (BE)**

• **DELMOTTE, Laurent
B-6040 Jumet (BE)**

(74) Mandataire: **Le Vaguerèse, Sylvain
Glaverbel,
Department Intellectual Property,
Centre R. & D.,
Rue de l'Aurore, 2
6040 Jumet (BE)**

(56) Documents cités:
EP-A- 0 798 271          EP-A- 0 803 479
EP-A- 0 816 296          EP-A- 0 849 233
WO-A-01/17920            GB-A- 2 289 273
GB-A- 2 315 487          JP-A- 10 095 632
JP-A- 11 217 234         US-A- 5 545 596
US-A- 5 688 727

**Description**

La présente invention se rapporte à un verre sodo-calcique coloré.

Du verre sodo-calcique peut être clair ou coloré, par exemple vert, gris ou bleu en transmission.

L'expression "verre sodo-calcique" est utilisée ici dans le sens large et concerne tout verre qui contient les constituants suivants (pourcentages en poids):

| | |
|---|---|
| $SiO_2$ | 60 à 75 % |
| $Na_2O$ | 10 à 20 % |
| CaO | 0 à 16 % |
| $K_2O$ | 0 à 10 % |
| MgO | 0 à 10 % |
| $Al_2O_3$ | 0 à 5 % |
| BaO | 0 à 2 % |
| BaO + CaO + MgO | 10 à 20 % |
| $K_2O + Na_2O$ | 10 à 20 %. |

Ce type de verre trouve un très large usage dans le domaine des vitrages pour l'automobile ou le bâtiment, par exemple. On le fabrique couramment sous forme de ruban par le procédé de flottage. Un tel ruban peut être découpé en feuilles qui peuvent ensuite être bombées ou subir un traitement de renforcement des propriétés mécaniques, par exemple, une trempe thermique.

Il est en général nécessaire de rapporter les propriétés optiques à un illuminant standard. Dans la présente description, on utilise 2 illuminants standards: l'illuminant C et l'illuminant A définis par la Commission Internationale de l'Eclairage (C.I.E;). L'illuminant C représente la lumière du jour moyenne ayant une température de couleur de 6700 K. Cet illuminant est surtout utile pour évaluer les propriétés optiques des vitrages destinés au bâtiment. L'illuminant A représente le rayonnement d'un radiateur de Planck à une température d'environ 2856 K. Cet illuminant figure la lumière émise par des phares de voiture et est surtout destiné à évaluer les propriétés optiques des vitrages destinés à l'automobile.

La Commission Internationale de l'Eclairage a également publié un document intitulé "Colorimétrie, Recommandations Officielles de la C.I.E." (mai 1970) qui décrit une théorie selon laquelle les coordonnées colorimétriques pour la lumière de chaque longueur d'onde du spectre visible sont définies de manière à pouvoir être représentées sur un diagramme ayant des axes orthogonaux x et y, appelé diagramme trichromatique C.I.E. 1931. Ce diagramme trichromatique montre le lieu représentatif de la lumière de chaque longueur d'onde (exprimée en nanomètres) du spectre visible. Ce lieu est appelé "spectrum locus" et la lumière dont les coordonnées se placent sur ce spectrum locus est dite posséder 100 % de pureté d'excitation pour la longueur d'onde appropriée. Le spectrum locus est fermé par une ligne appelée ligne des pourpres qui joint les points du spectrum locus dont les coordonnées correspondent aux longueurs d'onde 380 nm (violet) et 780 nm (rouge). La surface comprise entre le spectrum locus et la ligne des pourpres est celle disponible pour les coordonnées trichromatiques de toute lumière visible. Les coordonnées de la lumière émise par l'illuminant C par exemple, correspondent à x = 0,3101 et y = 0,3162. Ce point C est considéré comme représentant de la lumière blanche et de ce fait a une pureté d'excitation égale à zéro pour toute longueur d'onde. Des lignes peuvent être tirées depuis le point C vers le spectrum locus à toute longueur d'onde désirée et tout point situé sur ces lignes peut être défini non seulement par ses coordonnées x et y, mais aussi en fonction de la longueur d'onde correspondant à la ligne sur laquelle il se trouve et de sa distance depuis le point C rapportée à la longueur totale de la ligne de longueur d'onde. Dès lors, la teinte de la lumière transmise par une feuille de verre coloré peut être décrite par sa longueur d'onde dominante ($\lambda_D$) et sa pureté d'excitation (P) exprimée en pour-cent.

Les coordonnées C.I.E. de lumière transmise par une feuille de verre coloré dépendront non seulement de la composition du verre mais aussi de son épaisseur. Dans la présente description, ainsi que dans les revendications, toutes les valeurs de la pureté d'excitation P et de la longueur d'onde dominante $\lambda_D$ de la lumière transmise sont calculées à partir des transmissions spécifiques internes spectrales ($TSI_\lambda$) d'une feuille de verre de 5 mm d'épaisseur avec l'illuminant C sous un angle d'observation solide de 2°. La transmission spécifique interne spectrale d'une feuille de verre est régie uniquement par l'absorption du verre et peut être exprimée par la loi de Beer-Lambert:

$TSI_\lambda = e^{-EA\lambda}$ où $A_\lambda$ est le coefficient d'absorption du verre (en $cm^{-1}$) à la longueur d'onde considérée et E l'épaisseur du verre (en cm). En première approximation, $TSI_\lambda$ peut également être représenté par la formule

$$(I_3 + R_2) / (I_1 - R_1)$$

où $I_1$ est l'intensité de la lumière visible incidente à une première face de la feuille de verre, $R_1$ est l'intensité de la lumière visible réfléchie par cette face, $I_3$ est l'intensité de la lumière visible transmise à partir de la seconde face de la feuille de verre et $R_2$ est l'intensité de la lumière visible réfléchie vers l'intérieur de la feuille par cette seconde face.

L'indice de rendu d'une couleur, exprimé par un nombre compris entre 1 et 100, traduit l'écart entre une couleur et la perception qu'en a un observateur lorsqu' il la regarde à travers un écran transparent coloré. Plus cet écart est important, plus l'indice de rendu de la couleur en question sera faible. Pour une longueur d'onde $\lambda_D$ constante, lorsque la pureté de couleur du verre augmente, l'indice de rendu d'une couleur perçue au travers de ce verre diminue. L'indice de rendu des couleurs est calculé selon la norme EN 410, qui définit un indice moyen de rendu des couleurs ($I_c$). L'indice $I_c$ utilisé ci-après est calculé pour un verre de 4mm d'épaisseur.

Dans la description qui suit ainsi que dans les revendications, on utilise encore:

- la transmission lumineuse totale pour l'illuminant A (TLA), mesurée pour une épaisseur de 4 mm (TLA4) sous un angle d'observation solide de 2°. Cette transmission totale est le résultat de l'intégration entre les longueurs d'onde de 380 et 780 nm de l'expression: $\Sigma\ T_\lambda.E_\lambda.S_\lambda\ /\ \Sigma\ E_\lambda.S_\lambda$ dans laquelle $T_\lambda$ est la transmission à la longueur d'onde $\lambda$, $E_\lambda$ est la distribution spectrale de l'illuminant A et $S_\lambda$ est la sensibilité de l'oeil humain normal en fonction de la longueur d'onde $\lambda$.

- la transmission énergétique totale (TE), mesurée pour une épaisseur de 4 mm (TE4). Cette transmission totale est le résultat de l'intégration entre les longueurs d'onde 300 et 2500 nm de l'expression: $\Sigma\ T_\lambda.E_\lambda\ /\ \Sigma\ E_\lambda$. La distribution énergétique $E_\lambda$ est la distribution énergétique spectrale du soleil à 30° au dessus de l'horizon, avec une masse d'air égale à 2 et une inclinaison du vitrage de 60° par rapport à l'horizontale. Cette distribution, appelée "distribution de Moon", est définie dans la norme ISO 9050.

- la sélectivité (SE), mesurée par le rapport de la transmission lumineuse totale pour l'illuminant A et de la transmission énergétique totale (TLA/TE).

- la transmission totale dans l'ultraviolet, mesurée pour une épaisseur de 4 mm (TUV4). Cette transmission totale est le résultat de l'intégration entre 280 et 380 nm de l'expression: $\Sigma\ T_\lambda.U_\lambda\ /\ \Sigma\ U_\lambda$. dans laquelle $U_\lambda$ est la distribution spectrale du rayonnement ultraviolet ayant traversé l'atmosphère, déterminée dans la norme DIN 67507.

- Le rapport $Fe^{2+}$/Fe total, parfois appelé rapport rédox, qui représente la valeur du rapport en poids d'atome de $Fe^{2+}$ par rapport au poids total des atomes de fer présents dans le verre et qui s'obtient par la formule:

$$Fe^{2+}/Fe_{total} = [24.4495 \times \log (92/\tau_{1050})] / t\text{-}_{Fe2O3}$$

où $\tau_{1050}$ représente la transmission spécifique interne du verre de 5 mm à la longueur d'onde de 1050 nm. $t\text{-}_{Fe2O3}$ représente la teneur totale en fer exprimée sous forme d'oxyde $Fe_2O_3$ et mesurée par fluorescence X.

Du verre coloré peut être utilisé dans des applications architecturales ainsi que comme vitrages de voitures de chemin de fer et véhicules automobiles. En application architecturale, des feuilles de verre de 4 à 6 mm d'épaisseur seront généralement utilisées alors que dans le domaine automobile des épaisseurs de 1 à 5 mm sont couramment employées, en particulier pour la réalisation de vitrages monolithiques et des épaisseurs comprises entre 1 et 3 mm dans le cas de vitrages feuilletés, notamment de pare-brise, deux feuilles de verre de cette épaisseur étant alors solidarisées au moyen d'un film intercalaire, généralement en polyvinyl butyral (PVB).

Un des objets de l'invention est de réaliser un verre sodo-calcique comprenant du fer, du cobalt ainsi que du chrome et/ou du vanadium, qui combine des propriétés optiques et énergétiques, en particulier une coloration esthétiquement appréciée et une faible transmission énergétique, qui conviennent particulièrement mais non exclusivement dans le domaine des vitrages pour véhicules automobiles.

L'invention procure un verre sodo-calcique coloré dont la composition comprend :

- du fer en une quantité qui, exprimée en poids d'oxyde $Fe_2O_3$ par rapport au poids total de verre, est comprise entre 0,5 et 0,9% (quantité de fer total),

- du fer ferreux en une quantité qui, exprimée en poids d'atomes de $Fe^{2+}$ par rapport au poids total des atomes de fer présents dans le verre, est comprise entre 25 et 45% (rapport $Fe^{2+}$/Fe total),

- du cobalt en une quantité qui, exprimée en poids de Co par rapport au poids total de verre est d'au moins 5 parts par million,

- du chrome et/ou du vanadium

et le verre présente:

- une transmission lumineuse, mesurée sous illuminant A et calculée pour une épaisseur de 4 mm, comprise entre 20 et 60% (TLA4),

- une transmission énergétique, mesurée selon la distribution Moon et calculée pour une épaisseur de 4 mm, comprise entre 10 et 50% (TE4)
- une longueur d'onde dominante en transmission $\lambda_D$ inférieure à 491 nm.

On a trouvé qu'un tel verre permet de répondre aux considérations à la fois esthétiques et énergétiques souhaitées commercialement En particulier dans le domaine des véhicules automobiles un verre coloré selon l'invention peut présenter une teinte bleue, ayant une longueur d'onde en transmission inférieure à 491 nm, appréciée des constructeurs automobiles et une transmission énergétique basse permettant de limiter l'échauffement intérieur du véhicule.

La présence d'au moins un parmi les composants chrome et vanadium, associées aux critères de composition concernant le fer et le cobalt, permettent de réaliser un verre dont la longueur d'onde en transmission, la transmission lumineuse et la transmission énergétique répondent aux actuels critères esthétiques et énergétiques notamment des constructeurs de véhicules automobiles.

Du fer est présent dans la plupart des verres existant sur le marché, en particulier dans les verres colorés. La présence de $Fe^{3+}$ confère au verre une légère absorption de la lumière visible de faible longueur d'onde (410 et 440 nm) et une très forte bande d'absorption dans l'ultraviolet (bande d'absorption centrée sur 380 nm), tandis que la présence d'ions $Fe^{2+}$ provoque une forte absorption dans l'infrarouge (bande d'absorption centrée sur 1050 nm). La présence de $Fe^{3+}$ procure au verre une légère coloration jaune, généralement jugée peu agréable, tandis que les ions ferreux $Fe^{2+}$ donnent une coloration bleu vert prononcée. Une forte concentration en $Fe^{2+}$ dans le verre permet donc de diminuer la transmission énergétique TE et de procurer une coloration agréable. Toutefois, la présence de fer dans le bain de verre en fusion provoque une absorption du rayonnement infrarouge qui peut faire obstacle à la diffusion de chaleur dans le four de fabrication du verre et donc rendre cette fabrication plus difficile. De plus quand la concentration en fer augmente, la transmission lumineuse du verre diminue.

D'autre part, la présence de cobalt a tendance à conférer une coloration bleu intense au verre.

La présence de $Cr^{III}$ a tendance à conférer au verre une coloration vert clair tandis que la présence de $Cr^{VI}$ provoque une bande d'absorption très intense à 365 nm et une coloration jaune du verre.

La présence de vanadium tend à conférer au verre une teinte verte.

Les propriétés énergétiques et optiques d'un verre, en particulier sa couleur, sa transmission lumineuse et sa transmission énergétique résultent d'une interaction complexe entre ses composants. Le comportement des composants du verre dépend de leur état rédox et donc de la présence d'autres composants qui peuvent influencer cet état rédox.

On a trouvé que le verre tel que défini dans les revendications permet de répondre aux critères esthétiques (couleur) et opto-énergétiques (transmission lumineuse et transmission énergétique) par un contrôle aisé de sa composition en termes de fer, cobalt ainsi que chrome et/ou vanadium.

De préférence, la quantité de fer total est inférieure ou égale à 0,89%, de préférence inférieure ou égale à 0,88%. Ceci permet de faciliter la transition de la fabrication du verre clair vers la fabrication de verre coloré.

De préférence, la quantité de fer total est d'au moins 0,7% ou encore au moins 0,75%. Ceci favorise l'obtention d'une faible TE et d'une couleur agréable à l'oeil.

Pour réaliser un verre dont la couleur est souhaitable commercialement car jugée agréable à l'oeil, on a trouvé qu'il est préférable que le verre réponde à un ou plusieurs des critères suivants:

- de préférence, la quantité de cobalt est inférieure ou égale à 300 parts par million. Une quantité trop élevée de cobalt peut nuire à la sélectivité.
- avantageusement, la quantité de cobalt est comprise entre 20 et 200 parts par million, de préférence entre 60 et 120 parts par million, par exemple entre 60 et 110 parts par million.
- de préférence, la quantité de chrome, exprimée en poids de $Cr_2O_3$ par rapport au poids total de verre, est supérieure à 5 parts par million, 10 parts par million, et même 20 parts par million. Avantageusement, la quantité de chrome est supérieure à 50 parts par million.
- avantageusement, la quantité de chrome est inférieure ou égale à 300 parts par million, de préférence inférieure ou égale à 250 parts par million, en particulier inférieure à 220 parts par million.
- de préférence le verre comprend du vanadium en une quantité qui, exprimée en poids de $V_2O_5$ par rapport au poids total de verre est supérieure à 20 parts par million. Par exemple, elle est comprise entre 50 et 500 parts par million.

Dans les formes particulières de l'invention où le verre coloré contient du vanadium, celui-ci est de préférence présent en une quantité d'au moins 20 parts par million de vanadium exprimé en poids de $V_2O_5$ par rapport au poids total de verre. En présence d'une telle quantité de vanadium, la présence de chrome dans le verre n'est pas indispensable pour obtenir les caractéristiques souhaitées de propriétés optiques et énergétiques.

Cependant de préférence le verre coloré selon l'invention comprend une quantité de vanadium inférieure à 20 parts par million. Dans ce cas la présence de chrome dans le verre est indispensable pour réaliser l'invention.

En variante, le verre coloré selon l'invention comprend à la fois du chrome et du vanadium, par exemple 3 parts par million de chrome et 5 parts par million de vanadium.

La transmission lumineuse TLA4 peut être comprise entre 20 et 60%, avantageusement comprise entre 25 et 55%, de préférence comprise entre 38 et 52%. Ceci rend le verre coloré selon l'invention bien adapté à une utilisation par exemple en tant que vitrage de véhicules automobiles, notamment comme vitrage latéral ou comme lunette arrière. Par exemple la TLA4 peut être comprise entre 40 et 48%.

Il est souhaitable que le verre coloré présente une transmission énergétique TE4 comprise entre 10 et 50%, avantageusement comprise entre 15 et 40%, de préférence comprise entre 22 et 34%. Une faible transmission énergétique permet de limiter, en période d'ensoleillement, l'échauffement du volume intérieur délimité par le verre, tel qu'un bâtiment ou un véhicule automobile.

Pour une variante plus foncée du verre coloré, la TLA4 est comprise entre 20 et 40% et de préférence entre 25 et 35%. Dans ce cas, la TE4 varie entre 10 et 30%, de préférence entre 15 et 25%.

De préférence le verre présente une sélectivité supérieure à 1,2, de préférence supérieure à 1,35. Une sélectivité élevée est avantageuse tant pour les applications automobiles qu'architecturales car elle permet de limiter l'échauffement lié au rayonnement solaire et donc d'accroître le confort thermique des occupants du véhicule ou du bâtiment tout en procurant un éclairage naturel élevé et une visibilité au travers du vitrage.

En ce qui concerne la couleur du verre selon l'invention, il est souhaitable que sa longueur d'onde dominante en transmission $\lambda_D$ soit inférieure ou égale à 490 nm. Ceci correspond à un verre dont la couleur en transmission est généralement qualifiée de bleue, qui apparaît agréable à l'oeil humain et qui est très appréciée commercialement, notamment pour des vitrages de véhicules automobiles. Il est avantageux que le verre présente une $\lambda_D$ comprise entre 482 et 488nm.

De préférence, la pureté d'excitation en transmission du verre selon l'invention est supérieure à 5%, de préférence supérieure à 10% ou même à 12%. Ceci correspond à une teinte marquée, souhaitée commercialement. Il est spécialement préféré que la pureté soit comprise entre 15 et 25%.

De préférence, le verre selon l'invention possède un indice moyen de rendu des couleurs ($I_c$) qui répond à l'équation suivante:

$I_c > -0.59P+81$ où P est la valeur absolue (hors pourcentage) de la pureté. De préférence, l'indice moyen de rendu des couleurs répond à l'équation:

$$I_c > -0.59P+84.$$

Pour une pureté donnée du verre, un tel indice traduit une très faible distorsion des couleurs telles que perçues par un observateur à travers une feuille dudit verre.

Une valeur élevée de l'indice moyen de rendu des couleurs traduit le fait qu'un observateur aura une perception naturelle de son environnement vu à travers une feuille de verre coloré selon l'invention.

Cet avantage est particulièrement apprécié commercialement. En effet, la vision au travers de certains autres verres colorés existant sur le marché est marquée par une déformation des couleurs jugée désagréable par les utilisateurs: en particulier quand l'environnement et les personnes vues au travers de ces verres apparaissent jaunâtres.

Le verre coloré selon l'invention présente de préférence une transmission totale dans l'ultraviolet TUV4 inférieure à 30%. Ceci permet de limiter la décoloration inesthétique des objets, placés à l'intérieur des volumes délimités par les vitrages selon l'invention, sous l'effet du rayonnement solaire ultraviolet.

De préférence le verre contient moins de 2%, de préférence moins de 1% de titane, exprimée en poids de $TiO_2$ par rapport au poids total de verre, ou même moins de 0,1%. Une quantité élevée de $TiO_2$ risque de conférer une coloration jaune qui n'est pas souhaitée. Dans certains cas du $TiO_2$ ne sera contenu dans le verre que suite à la présence d'impuretés, sans ajout délibéré.

Il est souhaitable que le verre selon l'invention contienne moins de 2% de préférence moins de 1% de cérium, exprimé en poids de $CeO_2$ par rapport au poids total de verre. Le verre selon l'invention peut contenir moins de 0.1% de cérium. Le cérium a tendance à entraîner un déplacement de la longueur d'onde dominante vers le vert et le jaune, ce qui va à l'encontre de la teinte préférée. En outre le cérium est un composant très onéreux.

Avantageusement, le verre selon l'invention contient moins de 200 parts par million, de préférence moins de 100 parts par million, de nickel, exprimée en poids de NiO par rapport au poids total de verre. La présence de nickel peut nuire à la sélectivité du verre qui le contient car il n'absorbe pas la lumière dans le domaine de l'infrarouge ce qui conduit à une valeur de transmission énergétique importante. De plus, il procure une coloration jaune au verre. En outre la présence de nickel peut provoquer des difficultés de fabrication du verre (formation de sulfures, inclusions de nickel dans le verre).

Avantageusement, le verre selon l'invention contient moins de 1500 parts par million, de préférence moins de 500 parts par million, de manganèse exprimé en poids de $MnO_2$ par rapport au poids total de verre. Le manganèse sous forme $MnO_2$ présente un caractère oxydant qui peut modifier l'état rédox du fer et induire une nuance verte.

De préférence, le verre selon l'invention contient plus de 2% en poids d'oxyde magnésium MgO par rapport au poids total de verre. La présence de magnésium est favorable à la fusion des constituants lors de l'élaboration du verre.

Avantageusement, le verre selon l'invention contient moins de 30 parts par million de sélénium, de préférence moins de 10 parts par million en poids de Se par rapport au poids total de verre. La présence de sélénium peut conférer au verre une coloration rose ou rouge qui n'est pas souhaitée.

Il est souhaitable que le verre ne contienne pas de composés fluorés ou du moins que ceux-ci ne représentent pas plus de 0,2% en poids de F par rapport au poids du verre. En effet, ces composés entraînent des rejets de four nuisibles à l'environnement et sont de plus corrosifs pour les matériaux réfractaires qui tapissent l'intérieur du four de fabrication.

Le verre coloré selon l'invention forme de préférence un vitrage pour véhicule automobile. Il peut par exemple être avantageusement utilisé en tant que vitre latérale ou en tant que lunette arrière de véhicule.

Le verre selon l'invention peut être revêtu d'une couche. Par exemple il peut s'agir d'une couche d'oxydes métalliques réduisant son échauffement par le rayonnement solaire et par conséquent celui de l'habitacle d'un véhicule utilisant un tel verre comme vitrage.

Les verres selon la présente invention peuvent être fabriqués par des procédés traditionnels. En tant que matières premières, on peut utiliser des matières naturelles, du verre recyclé, des scories ou une combinaison de ces matières. Les constituants du verre ne sont pas nécessairement ajoutés dans la forme indiquée, mais cette manière de donner les quantités des composants, en équivalents dans les formes indiquées, répond à la pratique courante. En pratique, le fer est généralement ajouté sous forme de potée, le cobalt sous forme de sulfate hydraté, tel que $CoSO_4.7H_2O$ ou $CoSO_4.6H_2O$, le chrome sous forme de bichromate tel que $K_2Cr_2O_7$. Le cérium est souvent introduit sous forme d'oxyde ou de carbonate, le vanadium, sous forme d'oxyde ou de vanadate de sodium. Le sélénium, lorsqu'il est présent, peut être introduit sous forme élémentaire ou sous forme de sélénite tel que $Na_2SeO_3$ ou $ZnSeO_3$.

D'autres composants sont parfois présents à cause d'impuretés dans les matières premières utilisées pour fabriquer le verre selon l'invention que ce soit dans les matières naturelles, dans le verre recyclé ou dans les scories, de plus en plus utilisées, mais lorsque ces impuretés ne confèrent pas au verre des propriétés se situant hors des limites définies ci-dessus, ces verres sont considérés comme conformes à la présente invention.

La présente invention sera illustrée par les exemples suivants:

**Exemples 1 à 75**

Le tableau I donne à titre indicatif et non limitatif la composition de base du verre. Il est bien entendu qu'un verre possédant les mêmes propriétés optiques et énergétiques peut être obtenu avec une composition de base ayant des quantités d'oxydes comprises dans les gammes de pourcentages en poids données au début de la présente description.

Les verres selon les exemples contiennent moins de 1% en poids de $TiO_2$, moins de 0,1% de $CeO_2$, moins de 100 parts par million (ppm) de NiO, moins de 500 ppm $MnO_2$, moins de 30 ppm Se, plus de 2% MgO. Ils ont un indice moyen de rendu des couleurs $I_c$ à 4mm supérieur à (-0.59P+81). La valeur précise de $I_c$ est mentionnée chaque fois que disponible.

Sauf indication contraire, les verres selon les exemples contiennent moins de 10 ppm $V_2O_5$.

Tableau I:

| ANALYSE verre de base | |
|---|---|
| $SiO_2$ | 71,5 à 71,9% |
| $Al_2O_3$ | 0,8% |
| CaO | 8,8% |
| MgO | 4,2% |
| $Na_2O$ | 14,1% |
| $K_2O$ | 0,1% |
| $SO_3$ | 0,05 à 0,45% |

Les tableaux suivants donnent les concentrations des composants, les propriétés optiques et énergétiques de verres selon l'invention. Les concentrations sont déterminées par fluorescence X du verre et converties en l'espèce moléculaire indiquée.

La valeur de la transmission lumineuse $T_x$ du verre produit à une épaisseur x peut être convertie en une valeur de transmission lumineuse Ty à une épaisseur y par la formule suivante:

$$Ty = \left(1-\rho\right)^2 \left[\frac{T_x}{\left(1-\rho\right)^2}\right]^{\frac{y}{x}} \text{ avec } \rho = \left(\frac{n-1}{n+1}\right)^2 \text{ et } n = 1.5$$

Tableaux II-XIV :

| exemple | n°1 | n°2 | n°3 | n°4 | n°5 | n°6 |
|---|---|---|---|---|---|---|
| $Fe^{2+}/FeTot$ (%) | 36,28 | 34,26 | 33,20 | 27,02 | 40,00 | 25,35 |
| FeO (%) | 0,24 | 0,23 | 0,22 | 0,19 | 0,30 | 0,18 |
| $Fe_2O_3$ (%) | 0,726 | 0,731 | 0,747 | 0,766 | 0.825 | 0,774 |
| $V_2O_5$ (ppm) | | | 36 | | 120 | |
| Co (ppm) | 107 | 66 | 113 | 111 | 91 | 73 |
| $Cr_2O_3$ (ppm) | 208 | 232 | 53 | 44 | 40 | 49 |
| | | | | | | |
| x | 0,2516 | 0,2679 | 0,2494 | 0,2541 | 0,2547 | 0,2695 |
| y | 0,2844 | 0,3059 | 0,271 | 0,2753 | 0,2910 | 0,295 |
| Lambda nm | 484,1 | 488 | 481,4 | 481,6 | 485,3 | 484,4 |
| P (%) | 24,6 | 16,5 | 27 | 24,8 | 22,8 | 17 |
| TLA 4mm (%) | 41,2 | 49,2 | 43,9 | 44,7 | 43,5 | 53,5 |
| TE 4mm (%) | 30,9 | 34,3 | 33,8 | 36,8 | 29,1 | 40,8 |
| T uvt 4mm (%) | 19,3 | 19,2 | 20,8 | 17,9 | 18,8 | 18,8 |
| Selectivité | 1,33 | 1,43 | 1,30 | 1,21 | 1,5 | 1,31 |
| Ic | 71,8 | 77,2 | 73,9 | 76,2 | | 81,5 |

| exemple | n°7 | n°8 | n°9 | n°10 | n°11 | n°12 |
|---|---|---|---|---|---|---|
| $Fe^{2+}/FeTot$ (%) | 26,30 | 31,77 | 31,92 | 40 | 31,55 | 33,13 |
| FeO (%) | 0,19 | 0,23 | 0,24 | 0,30 | 0,25 | 0,27 |
| $Fe_2O_3$ (%) | 0,79 | 0,792 | 0,843 | 0,825 | 0,892 | 0,897 |
| $V_2O_5$ (ppm) | | | | 240 | | |
| Co (ppm) | 113 | 71 | 86 | 91 | 48 | 91 |
| $Cr_2O_3$ (ppm) | 240 | 49 | 134 | 0 | 138 | 154 |
| | | | | | | |
| x | 0,2567 | 0,2652 | 0,2606 | 0,2549 | 0,2751 | 0,2576 |
| y | 0,2888 | 0,2929 | 0,2928 | 0,2899 | 0,3139 | 0,2919 |
| Lambda nm | 484,5 | 484,5 | 485,1 | 485,0 | 490,2 | 485,2 |
| P (%) | 22,3 | 18,8 | 20,5 | 22,9 | 13,2 | 21,7 |
| TLA 4mm (%) | 42,6 | 51,2 | 45,8 | 43,5 | 52,2 | 43,3 |
| TE 4mm (%) | 35 | 35,9 | 32,3 | 29,2 | 33,3 | 29,7 |
| T uvt 4mm (%) | 18 | 19 | 16,8 | 18,5 | 14,4 | 15,3 |
| Selectivité | 1,22 | 1,43 | 1,42 | 1,49 | 1,57 | 1,46 |
| Ic | 74,3 | 79,2 | 76 | | 79,9 | 74,2 |

| exemple | n°13 | n°14 | n°15 | n°16 | n°17 |
|---|---|---|---|---|---|
| $Fe^{2+}/FeTot$ (%) | 38 | 37,90 | 44,78 | 38,32 | 44,91 |
| FeO (%) | 0,28 | 0,29 | 0,32 | 0,29 | 0,33 |
| $Fe_2O_3$ (%) | 0,8250 | 0,853 | 0,801 | 0,852 | 0,818 |
| $SO_3$ (%) | | 0,087 | 0,048 | 0,097 | 0,062 |
| Co (ppm) | 95 | 89 | 68 | 81 | 72 |
| $V_2O_5$ (ppm) | 240 | | | 482 | 648 |
| $Cr_2O_3$ (ppm) | 0 | 120 | 98 | 147 | 137 |
| | | | | | |
| x | 0,2550 | 0,2605 | 0,2569 | 0,2612 | 0,2562 |
| y | 0,2890 | 0,2968 | 0,2951 | 0,3004 | 0,2967 |
| Lambda nm | 484,8 | 486,1 | 486,1 | 487 | 486,5 |
| P (%) | 22,9 | 20,12 | 21,62 | 19,5 | 21,71 |
| TLA 4mm (%) (1) | 43,39 | 44,58 | 42,74 | 43,4 | 41,85 |
| TE 4mm (%) (1) | 29,97 | 28,9 | 26,52 | 28,13 | 25,64 |
| T uvt 4mm (%) | 18,25 | 14,1 | 14,28 | 12,41 | 13,82 |
| Selectivité | 1,45 | 1,54 | 1,61 | 1,54 | 1,63 |
| Ic | | | | | |

| exemple | n°18 | n°19 | n°20 | n°21 | n°22 | n°23 |
|---|---|---|---|---|---|---|
| $Fe_2O_3$ (%) | 0,7 | 0,75 | 0,8 | 0,85 | 0,7 | 0,75 |
| Co (ppm) | 80 | 70 | 65 | 60 | 80 | 70 |
| $V_2O_5$ (ppm) | | | | | | |
| $Cr_2O_3$ (ppm) | 232 | 210 | 180 | 230 | 232 | 210 |
| FeO (%) | 0,2394 | 0,2565 | 0,2736 | 0,2907 | 0,2646 | 0,2835 |
| $Fe^{2+}/FeTot$ (%) | 38 | 38 | 38 | 38 | 42 | 42 |
| | | | | | | |
| x | 0,2598 | 0,2630 | 0,2642 | 0,2666 | 0,2565 | 0,2596 |
| y | 0,2961 | 0,3008 | 0,3025 | 0,3095 | 0,2939 | 0,2987 |
| TLA 4mm (%) | 45,77 | 46,90 | 47,20 | 46,88 | 44,20 | 45,33 |
| TE 4mm (%) | 31,77 | 31,23 | 30,40 | 29,12 | 29,16 | 28,61 |
| T uvt 4mm (%) | 20,05 | 18,75 | 17,47 | 16,36 | 20,06 | 18,76 |
| Selectivité | 1,44 | 1,50 | 1,55 | 1,61 | 1,52 | 1,58 |
| Lambda (nm) | 486,0 | 486,9 | 487,3 | 489,1 | 485,8 | 486,7 |
| P (%) | 20,4 | 18,8 | 18,2 | 16,7 | 21,9 | 20,2 |

| exemple | n°24 | n°25 | n°26 | n°27 | n°28 | n°29 |
|---|---|---|---|---|---|---|
| $Fe_2O_3$ (%) | 0,8 | 0,85 | 0,7 | 0,75 | 0,8 | 0,85 |
| Co (ppm) | 65 | 60 | 105 | 90 | 90 | 80 |
| $V_2O_5$ (ppm) | | | | | | |
| $Cr_2O_3$ (ppm) | 180 | 230 | 110 | 150 | 180 | 220 |
| FeO (%) | 0,3024 | 0,3213 | 0,2268 | 0,2430 | 0,2592 | 0,2754 |
| $Fe^{2+}$/FeTot (%) | 42 | 42 | 36 | 36 | 36 | 36 |
| x | 0,2609 | 0,2632 | 0,2513 | 0,2571 | 0,2574 | 0,2615 |
| y | 0,3003 | 0,3074 | 0,2783 | 0,2898 | 0,2930 | 0,3019 |
| TLA 4mm (%) | 45,63 | 45,31 | 42,86 | 44,38 | 43,33 | 43,97 |
| TE 4mm (%) | 27,79 | 26,51 | 32,47 | 31,89 | 30,40 | 29,49 |
| T uvt 4mm (%) | 17,48 | 16,37 | 19,68 | 18,47 | 17,36 | 16,20 |
| Selectivité | 1,64 | 1,71 | 1,32 | 1,39 | 1,43 | 1,49 |
| Lambda (nm) | 487,0 | 488,7 | 482,8 | 484,7 | 485,5 | 487,4 |
| P (%) | 19,6 | 18,1 | 25,5 | 22,1 | 21,6 | 19,3 |

| exemple | n°30 | n°31 | n°32 | n°33 | n°34 | n°35 |
|---|---|---|---|---|---|---|
| $Fe_2O_3$ (%) | 0,88 | 0,85 | 0,82 | 0,8 | 0,81 | 0,6 |
| Co (ppm) | 95 | 75 | 85 | 95 | 105 | 130 |
| $V_2O_5$ (ppm) | | | | | | 253 |
| $Cr_2O_3$ (ppm) | 105 | 50 | 235 | 185 | 171 | 110 |
| FeO (%) | 0,3406 | 0,3443 | 0,3321 | 0,2952 | 0,2843 | 0,1728 |
| $Fe^{2+}$/FeTot (%) | 43 | 45 | 45 | 41 | 39 | 32 |
| x | 0,2484 | 0,2534 | 0,2525 | 0,2515 | 0,2493 | 0,2475 |
| y | 0,2834 | 0,2881 | 0,2949 | 0,2881 | 0,2834 | 0,2677 |
| TLA 4mm (%) | 39,01 | 42,66 | 39,93 | 40,45 | 39,43 | 42,37 |
| TE 4mm (%) | 23,83 | 24,91 | 23,99 | 26,78 | 27,27 | 36,25 |
| T uvt 4mm (%) | 15,38 | 15,81 | 17,00 | 17,43 | 17,24 | 19,15 |
| Selectivité | 1,64 | 1,71 | 1,66 | 1,51 | 1,45 | 1,17 |
| Lambda (nm) | 484,3 | 484,8 | 486,4 | 485,0 | 484,2 | 480,9 |
| P (%) | 25,9 | 23,6 | 23,2 | 24,3 | 25,6 | 28,1 |

| exemple | n°36 | n°37 | n°38 | n°39 | n°40 | n°41 |
|---|---|---|---|---|---|---|
| $Fe_2O_3$ (%) | 0,7 | 0,8 | 0,62 | 0,68 | 0,82 | 0,62 |
| Co (ppm) | 145 | 158 | 115 | 123 | 95 | 85 |
| $V_2O_5$ (ppm) | 52 | 480 | 852 | 942 | 483 | 852 |
| $Cr_2O_3$ (ppm) | 231 | 15 | 52 | 87 | 158 | 52 |
| FeO (%) | 0,1890 | 0,2016 | 0,1730 | 0,1897 | 0,2214 | 0,1786 |
| $Fe^{2+}$/FeTot (%) | 30 | 28 | 31 | 31 | 30 | 32 |
| x | 0,2439 | 0,2399 | 0,2565 | 0,2544 | 0,2633 | 0,2666 |
| y | 0,2691 | 0,2568 | 0,2801 | 0,2810 | 0,2978 | 0,2948 |
| TLA 4mm (%) | 38,61 | 35,78 | 43,56 | 40,61 | 44,62 | 48,45 |
| TE 4mm (%) | 33,56 | 32,04 | 36,82 | 34,40 | 33,41 | 38,08 |
| T uvt 4mm (%) | 17,66 | 13,93 | 17,02 | 15,55 | 13,26 | 16,78 |
| Selectivité | 1,15 | 1,12 | 1,18 | 1,18 | 1,34 | 1,27 |
| Lambda (nm) | 481,8 | 479,9 | 482,4 | 482,9 | 486,1 | 484,8 |
| P (%) | 29,2 | 32,1 | 23,4 | 24,0 | 19,0 | 18,1 |

| exemple | n°42 | n°43 | n°44 | n°45 | n°46 | n°47 |
|---|---|---|---|---|---|---|
| $Fe_2O_3$ (%) | 0,7 | 0,852 | 0,825 | 0,72 | 0,88 | 0,62 |
| Co (ppm) | 65 | 72 | 95 | 112 | 98 | 125 |
| $V_2O_5$ (ppm) | 8 | | 240 | 389 | 625 | 12 |
| $Cr_2O_3$ (ppm) | 198 | 215 | 0 | 125 | 242 | 238 |
| FeO (%) | 0,1922 | 0,2147 | 0,30 | 0,2203 | 0,2851 | 0,1841 |
| $Fe^{2+}$/FeTot (%) | 30,5 | 28 | 40 | 34 | 36 | 33 |
| x | 0,2719 | 0,2711 | 0.2535 | 0,2530 | 0,2590 | 0,2488 |
| y | 0,3065 | 0,3088 | 0.2879 | 0,2813 | 0,3020 | 0,2757 |
| TLA 4mm (%) | 52,89 | 50,08 | 42.84 | 42,25 | 39,64 | 42,32 |
| TE 4mm (%) | 38,60 | 35,70 | 28.9 | 32,66 | 27,03 | 34,99 |
| T uvt 4mm (%) | 17,04 | 13,58 | 18.54 | 15,91 | 11,75 | 19,49 |
| Selectivité | 1,37 | 1,40 | 1.48 | 1,29 | 1,47 | 1,21 |
| Lambda (nm) | 487,9 | 488,7 | 484,7 | 483,2 | 487,5 | 482,5 |
| P (%) | 15,0 | 15,1 | 23,6 | 24,5 | 20,2 | 26,7 |

| exemple | n°48 | n°49 | n°50 | n°51 | n°52 | n°53 |
|---|---|---|---|---|---|---|
| $Fe_2O_3$ (%) | 0,69 | 0,82 | 0,55 | 0,69 | 0,88 | 0,63 |
| Co (ppm) | 95 | 94 | 87 | 85 | 62 | 114 |
| $V_2O_5$ (ppm) | 357 | | | 275 | | |
| $Cr_2O_3$ (ppm) | 69 | 210 | 123 | | 175 | 234 |
| FeO (%) | 0,2360 | 0,2731 | 0,1708 | 0,2329 | 0,3049 | 0,2381 |
| $Fe^{2+}$/FeTot (%) | 38 | 37 | 34,5 | 37,5 | 38,5 | 42 |
| x | 0,2550 | 0,2557 | 0,2599 | 0,2576 | 0,2654 | 0,2452 |
| y | 0,2828 | 0,2918 | 0,2846 | 0,2824 | 0,3062 | 0,2762 |
| TLA 4mm (%) | 44,70 | 43,23 | 50,50 | 47,47 | 47,58 | 40,64 |
| TE 4mm (%) | 32,29 | 29,28 | 38,97 | 33,77 | 28,97 | 29,59 |
| T uvt 4mm (%) | 16,44 | 14,52 | 20,61 | 16,40 | 12,78 | 19,21 |
| Selectivité | 1,38 | 1,48 | 1,30 | 1,41 | 1,64 | 1,37 |
| Lambda (nm) | 483,3 | 485,4 | 483,0 | 482,8 | 488,2 | 483,2 |
| P (%) | 23,6 | 22,4 | 21,6 | 22,7 | 17,4 | 27,9 |

| exemple | n°54 | n°55 | n°56 | n°57 | n°58 | n°59 |
|---|---|---|---|---|---|---|
| $Fe_2O_3$ (%) | 0,75 | 0,87 | 0,6 | 0,69 | 0,85 | 0,61 |
| Co (ppm) | 99 | 135 | 78 | 117 | 104 | 78 |
| $V_2O_5$ (ppm) | | | 359 | 482 | 152 | 102 |
| $Cr_2O_3$ (ppm) | 210 | 52 | | 198 | 212 | |
| FeO (%) | 0,2633 | 0,3210 | 0,2052 | 0,2298 | 0,3213 | 0,2361 |
| $Fe^{2+}$/FeTot (%) | 39 | 41 | 38 | 37 | 42 | 43 |
| x | 0,2524 | 0,2349 | 0,2605 | 0,2504 | 0,2487 | 0,2548 |
| y | 0,2866 | 0,2593 | 0,2847 | 0,2826 | 0,2868 | 0,2789 |
| TLA 4mm (%) | 42,70 | 34,89 | 49,69 | 39,79 | 38,51 | 48,41 |
| TE 4mm (%) | 29,50 | 23,64 | 36,14 | 30,61 | 24,36 | 32,97 |
| T uvt 4mm (%) | 16,21 | 13,35 | 18,26 | 16,60 | 13,56 | 18,64 |
| Selectivité | 1,45 | 1,48 | 1,37 | 1,30 | 1,58 | 1,47 |
| Lambda (nm) | 484,5 | 481,2 | 482,9 | 483,9 | 485,0 | 482,4 |
| P (%) | 24,1 | 33,6 | 21,4 | 25,3 | 25,4 | 24,1 |

| exemple | n°60 | n°61 | n°62 | n°63 |
|---|---|---|---|---|
| $Fe_2O_3$ (%) | 0,75 | 0,85 | 0,875 | 0,825 |
| Co (ppm) | 63 | 58 | 87 | 95 |
| $V_2O_5$ (ppm) | | 25 | | |
| $Cr_2O_3$ (ppm) | 85 | 185 | 180 | 120 |
| FeO (%) | 0,2768 | 0,2984 | 0,28 | 0,28 |
| $Fe^{2+}/FeTot$ (%) | 41 | 39 | 35 | 38 |
| x | 0,2621 | 0,2668 | 0,2608 | 0,2551 |
| y | 0,2953 | 0,3083 | 0,3049 | 0,2940 |
| TLA 4mm (%) | 49,24 | 48,41 | 43,70 | 43,06 |
| TE 4mm (%) | 31,21 | 29,60 | 29,94 | 29,59 |
| T uvt 4mm (%) | 15,65 | 13,42 | 17,07 | 18,90 |
| Selectivité | 1,58 | 1,64 | 1,46 | 1,46 |
| Lambda (nm) | 485,5 | 488,7 | 488,2 | 486,0 |
| P (%) | 19,7 | 16,7 | 19,2 | 22,4 |

| exemple | n°64 | n°65 | n°66 | n°67 | n°68 |
|---|---|---|---|---|---|
| $Fe_2O_3$ (%) | 0,825 | 0,825 | 0,825 | 0,8 | 0,85 |
| Co (ppm) | 95 | 95 | 95 | 86 | 82 |
| $V_2O_5$ (ppm) | | | | | |
| $Cr_2O_3$ (ppm) | 80 | 80 | 50 | 40 | 60 |
| FeO (%) | 0,28 | 0,30 | 0,30 | 0,29 | 0,30 |
| $Fe^{2+}/FeTot$ (%) | 38 | 40 | 40 | 40 | 39 |
| x | 0,2546 | 0,2531 | 0,2527 | 0,2558 | 0,2580 |
| y | 0,2913 | 0,2902 | 0,2881 | 0,2914 | 0,2965 |
| TLA 4mm (%) | 43,43 | 42,88 | 43,16 | 45,26 | 45,06 |
| TE 4mm (%) | 29,83 | 28,76 | 28,94 | 30,27 | 29,53 |
| T uvt 4mm (%) | 18,87 | 19,16 | 19,14 | 19,70 | 18,17 |
| Selectivité | 1,46 | 1,49 | 1,49 | 1,50 | 1,53 |
| lambda (nm) | 485,4 | 485,3 | 484,9 | 485,3 | 486,3 |
| pureté (%) | 22,8 | 23,5 | 23,9 | 22,4 | 21,1 |

| exemple | n°69 | n°70 | n°71 | n°72 | n°73 |
|---|---|---|---|---|---|
| $Fe_2O_3$ (%) | 0,85 | 0,84 | 0,82 | 0,8 | 0,8 |
| Co (ppm) | 84 | 98 | 98 | 102 | 89 |
| $V_2O_5$ (ppm) | | | | | |
| $Cr_2O_3$ (ppm) | 85 | 92 | 115 | 135 | 153 |
| FeO (%) | 0,32 | 0,31 | 0,30 | 0,27 | 0,30 |
| $Fe^{2+}$/FeTot (%) | 42 | 41 | 41 | 38 | 41 |
| x | 0,2553 | 0,2513 | 0,2517 | 0,2530 | 0,2554 |
| y | 0,2954 | 0,2892 | 0,2903 | 0,2909 | 0,2969 |
| TLA 4mm (%) | 43,66 | 41,69 | 41,87 | 42,22 | 43,43 |
| TE 4mm (%) | 27,63 | 27,53 | 27,96 | 29,77 | 28,86 |
| T uvt 4mm (%) | 18,64 | 18,94 | 19,49 | 19,67 | 19,96 |
| Selectivité | 1,58 | 1,51 | 1,50 | 1,42 | 1,50 |
| lambda (nm) | 486,3 | 485,3 | 485,5 | 485,5 | 486,6 |
| pureté (%) | 22,2 | 24,2 | 24,0 | 23,4 | 22,0 |

| exemple | n°74 | n°75 |
|---|---|---|
| $Fe_2O_3$ (%) | 0,83 | 0,825 |
| Co (ppm) | 94 | 95 |
| $V_2O_5$ (ppm) | | 120 |
| $Cr_2O_3$ (ppm) | 172 | 40 |
| FeO (%) | 0,30 | 0,28 |
| $Fe^{2+}$ /FeTot (%) | 40 | 38 |
| x | 0,2546 | 0,2548 |
| y | 0,2970 | 0,2902 |
| TLA 4mm (%) | 42,09 | 43,41 |
| TE 4mm (%) | 28,12 | 29,90 |
| T uvt 4mm (%) | 19,08 | 18,56 |
| Selectivité | 1,50 | 1,45 |
| lambda (nm) | 486,7 | 485,1 |
| pureté (%) | 22,3 | 22,9 |

**Revendications**

1.  Verre sodo-calcique coloré qui comprend :

    -   du fer en une quantité qui, exprimée en poids d'oxyde $Fe_2O_3$ par rapport au poids total de verre, est comprise entre 0.5 et 0.9% (quantité de fer total),
    -   du fer ferreux en une quantité qui, exprimée en poids d'atomes de $Fe^{2+}$ par rapport au poids total des atomes de fer présents dans le verre, est comprise entre 25 et 45% (rapport $Fe^{2+}$/Fe total),
    -   du cobalt en une quantité qui, exprimée en poids de Co par rapport au poids total de verre est d'au moins 5 parts par million,
    -   du chrome et/ou du vanadium,
    -   moins de 500 parts par million de manganèse exprimé en poids de $MnO_2$ par rapport au poids total de verre

    et le verre présente :

    -   une transmission lumineuse, mesurée sous illuminant A et calculée pour une épaisseur de 4 mm, comprise entre 20 et 60% (TLA4),
    -   une transmission énergétique, mesurée selon la distribution Moon et calculée pour une épaisseur de 4 mm, comprise entre 10 et 50% (TE4) et
    -   une longueur d'onde dominante en transmission $\lambda_D$ inférieure à 491 nm.

2.  Verre sodo-calcique coloré selon la revendication 1, **caractérisé en ce que** la quantité de fer total est inférieure ou égale à 0.89%, de préférence inférieure ou égale à 0.88%.

3.  Verre sodo-calcique coloré selon la revendication 1 ou 2, **caractérisé en ce que** la quantité de fer total est d'au moins 0.7%, de préférence au moins 0.75%.

4.  Verre sodo-calcique selon l'une des revendications 1 à 3, **caractérisé en ce que** la quantité de cobalt est inférieure ou égale à 300 parts par million.

5.  Verre sodo-calcique selon la revendication 4, **caractérisé en ce que** la quantité de cobalt est comprise entre 20 et 200 parts par million, de préférence entre 60 et 120 parts par million.

6.  Verre sodo-calcique selon l'une des revendications 1 à 5, **caractérisé en ce que** la quantité de chrome est supérieure à 10 parts par million, de préférence supérieure à 20 parts par million, exprimé en poids de $Cr_2O_3$ par rapport au poids total de verre.

7.  Verre sodo-calcique selon l'une des revendications 1 à 6, **caractérisé en ce que** la quantité de chrome est inférieure ou égale à 300 parts par million, de préférence inférieure ou égale à 250 parts par million, exprimé en poids de $Cr_2O_3$ par rapport au poids total de verre.

8.  Verre sodo-calcique selon l'une des revendications 1 à 7, **caractérisé en ce que** le verre comprend du vanadium en une quantité qui, exprimée en poids de $V_2O_5$ par rapport au poids total de verre est comprise entre 50 et 500 parts par million.

9.  Verre sodo-calcique coloré selon l'une des revendications précédentes, **caractérisé en ce que** sa transmission lumineuse TLA4 est comprise entre 25 et 55%, de préférence entre 38 et 52%.

10. Verre sodo-calcique selon l'une des revendications précédentes, **caractérisé en ce que** sa transmission énergétique TE4 est comprise entre 15 et 40%, de préférence entre 22 et 34%.

11. Verre sodo-calcique selon l'une des revendications précédentes, **caractérisé en ce qu'**il présente une sélectivité supérieure à 1.2, de préférence supérieure à 1.35.

12. Verre sodo-calcique selon l'une des revendications précédentes, **caractérisé en ce que** sa longueur d'onde dominante en transmission $\lambda_D$ est inférieure ou égale à 490 nm.

13. Verre sodo-calcique selon l'une des revendications précédentes, **caractérisé en ce que** sa pureté d'excitation en transmission est supérieure à 5%, de préférence supérieure à 10%.

**14.** Verre sodo-calcique selon l'une des revendications précédentes, **caractérisé en ce qu'**il contient moins de 2%, de préférence moins de 1% de titane, exprimé en poids de $TiO_2$ par rapport au poids total de verre.

**15.** Verre sodo-calcique selon l'une des revendications précédentes, **caractérisé en ce qu'**il contient moins de 0,1% de titane, exprimé en poids de $TiO_2$ par rapport au poids total de verre.

**16.** Verre sodo-calcique selon l'une des revendications précédentes, **caractérisé en ce qu'**il contient moins de 2%, de préférence moins de 1% de cérium, exprimé en poids de $CeO_2$ par rapport au poids total de verre.

**17.** Verre sodo-calcique selon l'une des revendications précédentes, **caractérisé en ce qu'**il contient moins de 200 parts par million, de préférence moins de 100 parts par million de nickel, exprimé en poids de NiO par rapport au poids total de verre.

**18.** Verre sodocalcique selon l'une des revendications précédentes, **caractérisé en ce qu'**il contient plus de 2% en poids d'oxyde magnésium MgO par rapport au poids total de verre.

**19.** Verre sodocalcique selon l'une des revendications précédentes, **caractérisé en ce qu'**il contient moins de 30 parts par million de sélénium, de préférence moins de 10 parts par million en poids de Se par rapport au poids total de verre.

**20.** Verre sodocalcique selon l'une des revendications précédentes, **caractérisé en ce qu'**il est revêtu d'une couche.

**Patentansprüche**

**1.** Gefärbtes Natron-Kalk-Glas, das umfaßt:

- Eisen in einer Menge, die, ausgedrückt als $Fe_2O_3$, bezogen auf das Gesamtgewicht des Glases zwischen 0,5 und 0,9 % liegt (Menge an gesamten Eisen)
- Ferroeisen in einer Menge, die, ausgedrückt als Gewicht der Atome an $Fe^{2+}$, bezogen auf das Gesamtgewicht an Eisenatomen, die im Glas vorhanden sind, zwischen 25 und 45 % liegt (Verhältnis $Fe^{2+}$/Fe-Gesamt)
- Kobalt in einer Menge, die, ausgedrückt als Gewicht an Kobalt, bezogen auf das Gesamtgewicht des Glases 5 ppm beträgt,
- Chrom und/oder Vanadium
- weniger als 500 ppm Mangan, ausgedrückt als Gewicht an $MnO_2$, bezogen auf das Gesamtgewicht des Glases,

und wobei das Glas

- eine Lichtdurchlässigkeit, gemessen unter der Lichtquelle A und berechnet für eine Dicke von 4 mm, die zwischen 20 und 60% liegt (TLA4)
- eine energetische Durchlässigkeit, gemessen nach der Moon-Verteilung und berechnet für eine Dicke von 4 mm, zwischen 10 und 50% (TE4) und
- eine dominierende Transmissionswellenlänge $\lambda_D$ von weniger als 491 nm aufweist.

**2.** Gefärbtes Natron-Kalk-Glas nach Anspruch 1, **dadurch gekennzeichnet, dass** die Menge an gesamten Eisen weniger als oder gleich 0,89%, vorzugsweise weniger als oder gleich 0,88% ist.

**3.** Gefärbtes Natron-Kalk-Glas nach einem der Ansprüche 1 oder 2, **dadurch gekennzeichnet, dass** die Menge an gesamten Eisen wenigstens 0,7%, vorzugsweise wenigstens 0,75% beträgt.

**4.** Natron-Kalk-Glas nach einem der Ansprüche 1 bis 3, **dadurch gekennzeichnet, dass** die Menge an Kobalt weniger als oder gleich 300 ppm ist.

**5.** Natron-Kalk-Glas nach Anspruch 4, **dadurch gekennzeichnet, dass** die Menge an Kobalt zwischen 20 und 200 ppm liegt, vorzugsweise zwischen 60 und 120 ppm.

6.  Natron-Kalk-Glas nach einem der Ansprüche 1 bis 5, **dadurch gekennzeichnet, dass** die Menge an Chrom mehr als 10 ppm, vorzugsweise mehr als 20 ppm, ausgedrückt als Gewicht an $Cr_2O_3$, bezogen auf das Gesamtgewicht des Glases, beträgt.

7.  Natron-Kalk-Glas nach einem der Ansprüche 1 bis 6, **dadurch gekennzeichnet, dass** die Menge an Chrom weniger als oder gleich 300 ppm ist, vorzugsweise weniger als oder gleich 250 ppm, ausgedrückt als Gewicht an $Cr_2O_3$, bezogen auf das Gesamtgewicht des Glases.

8.  Natron-Kalk-Glas nach einem der Ansprüche 1 bis 8, **dadurch gekennzeichnet, dass** das Glas Vanadium in einer Menge umfaßt, die, ausgedrückt als Gewicht an $V_2O_5$, bezogen auf das Gesamtgewicht des Glases, zwischen 50 und 500 ppm liegt.

9.  Natron-Kalk-Glas nach einem der vorhergehenden Ansprüche, **dadurch gekennzeichnet, dass** seine Lichtdurchlässigkeit TLA4 zwischen 25 und 55%, vorzugsweise zwischen 38 und 52% beträgt.

10. Natron-Kalk-Glas nach einem der vorhergehenden Ansprüche, **dadurch gekennzeichnet, dass** seine energetische Durchlässigkeit TE4 zwischen 15 und 40%, vorzugsweise zwischen 22 und 34% beträgt.

11. Gefärbtes Natron-Kalk-Glas nach einem der vorhergehenden Ansprüche, **dadurch gekennzeichnet, dass** es eine Selektivität von mehr als 1,2, vorzugsweise von mehr als 1,35 aufweist.

12. Natron-Kalk-Glas nach einem der vorhergehenden Ansprüche, **dadurch gekennzeichnet, dass** seine dominierende Transmissionswellenlänge $\lambda_D$ weniger oder gleich 490 nm ist.

13. Natron-Kalk-Glas nach einem der vorhergehenden Ansprüche, **dadurch gekennzeichnet, dass** seine Transmissionsanregungsreinheit mehr als 5%, vorzugsweise mehr als 10% beträgt.

14. Natron-Kalk-Glas nach einem der vorhergehenden Ansprüche, **dadurch gekennzeichnet, dass** es weniger als 2%, vorzugsweise weniger als 1 % Titan, ausgedrückt als Gewicht an $TiO_2$, bezogen auf das Gesamtgewicht des Glases, enthält.

15. Natron-Kalk-Glas nach einem der vorhergehenden Ansprüche, **dadurch gekennzeichnet, dass** es weniger als 0,1%, ausgedrückt als Gewicht an $TiO_2$, bezogen auf das Gesamtgewicht des Glases, enthält.

16. Natron-Kalk-Glas nach einem der vorhergehenden Ansprüche, **dadurch gekennzeichnet, dass** es weniger als 2%, vorzugsweise weniger als 1% Cer, ausgedrückt als Gewicht an $CeO_2$, bezogen auf das Gesamtgewicht des Glases, enthält.

17. Natron-Kalk-Glas nach einem der vorhergehenden Ansprüche, **dadurch gekennzeichnet, dass** es weniger als 200 ppm, vorzugsweise weniger als 100 ppm Nickel, ausgedrückt als Gewicht an NiO, bezogen auf das Gesamtgewicht des Glases, enthält.

18. Natron-Kalk-Glas nach einem der vorhergehenden Ansprüche, **dadurch gekennzeichnet, dass** es mehr als 2 Gewichts-% an Magnesiumoxid (MgO), bezogen auf das Gesamtgewicht des Glases enthält.

19. Natron-Kalk-Glas nach einem der vorhergehenden Ansprüche, **dadurch gekennzeichnet, dass** es weniger als 30 ppm Selen, vorzugsweise weniger als 10 ppm an Selen-Gewicht, bezogen auf das Gesamtgewicht des Glases enthält.

20. Natron-Kalk-Glas nach einem der vorhergehenden Ansprüche, **dadurch gekennzeichnet, dass** es mit einer Schicht überzogen ist.

**Claims**

1.  Coloured soda-lime glass which comprises:

    - iron in an amount which, expressed by weight of $Fe_2O_3$ oxide with respect to the total weight of glass, is

**17**

between 0.5 and 0.9% (total amount of iron);
- ferrous iron in an amount which, expressed by weight of $Fe^{2+}$ atoms with respect to the total weight of iron atoms present in the glass, is between 25 and 45% ($Fe^{2+}$/total Fe ratio);
- cobalt in an amount which, expressed by weight of Co with respect to the total weight of glass, is at least 5 parts per million;
- chromium and/or vanadium;
- less than 500 parts per million of manganese, expressed by weight of MnO2 with respect to the total weight of glass;

and the glass has:

- a light transmission, measured under illuminant A and calculated for a thickness of 4 mm, of between 20 and 60% (TLA4),
- an energy transmission, measured according to the Moon distribution and calculated for a thickness of 4 mm, of between 10 and 50% (TE4) and
- a dominant wavelength $\lambda_D$ in transmission of less than 491 nm.

2. Coloured soda-lime glass according to Claim 1, **characterized in that** the amount of total iron is less than or equal to 0.89%, preferably less than or equal to 0.88%.

3. Coloured soda-lime glass according to Claim 1 or 2, **characterized in that** the amount of total iron is at least 0.7%, preferably at least 0.75%.

4. Soda-lime glass according to one of Claims 1 to 3, **characterized in that** the amount of cobalt is less than or equal to 300 parts per million.

5. Soda-lime glass according to Claim 4, **characterized in that** the amount of cobalt is between 20 and 200 parts par million, preferably between 60 and 120 parts per million.

6. Soda-lime glass according to one of Claims 1 to 5, **characterized in that** the amount of chromium is greater than 10 parts per million, preferably greater than 20 parts per million, expressed by weight of $Cr_2O_3$ with respect to the total weight of glass.

7. Soda-lime glass according to one of Claims 1 to 6, **characterized in that** the amount of chromium is less than or equal to 300 parts per million, preferably less than or equal to 250 parts per million, expressed by weight of $Cr_2O_3$ with respect to the total weight of glass.

8. Soda-lime glass according to one of Claims 1 to 7, **characterized in that** the glass contains vanadium in an amount which, expressed by weight of $V_2O_5$ with respect to the total weight of glass, is between 50 and 500 parts per million.

9. Coloured soda-lime glass according to one of the preceding claims, **characterized in that** its light transmission TLA4 is between 25 and 55%, preferably between 38 and 52%.

10. Soda-lime glass according to one of the preceding claims, **characterized in that** its energy transmission TE4 is between 15 and 40%, preferably between 22 and 34%.

11. Soda-lime glass according to one of the preceding claims, **characterized in that** it has a selectivity greater than 1.2, preferably greater than 1.35.

12. Soda-lime glass according to one of the preceding claims, **characterized in that** its dominant wavelength $\lambda_D$ in transmission is less than or equal to 490 nm.

13. Soda-lime glass according to one of the preceding claims, **characterized in that** its excitation purity in transmission is greater than 5%, preferably greater than 10%.

14. Soda-lime glass according to one of the preceding claims, **characterized in that** it contains less than 2%, preferably less than 1%, titanium expressed by weight of $TiO_2$ with respect to the total weight of glass.

15. Soda-lime glass according to one of the preceding claims, **characterized in that** it contains less than 0.1% titanium expressed by weight of $TiO_2$ with respect to the total weight of glass.

16. Soda-lime glass according to one of the preceding claims, **characterized in that** it contains less than 2%, preferably less than 1%, cerium expressed by weight of $CeO_2$ with respect to the total weight of glass.

17. Soda-lime glass according to one of the preceding claims, **characterized in that** it contains less than 200 parts per million, preferably less than 100 parts per million, of nickel expressed by weight of NiO with respect to the total weight of glass.

18. Soda-lime glass according to one of the preceding claims, **characterized in that** it contains more than 2% by weight of magnesium oxide MgO with respect to the total weight of glass.

19. Soda-lime glass according to one of the preceding claims, **characterized in that** it contains less than 30 parts per million, preferably less than 10 parts per million, by weight of selenium with respect to the total weight of glass.

20. Soda-lime glass according to one of the preceding claims, **characterized in that** it is coated with a film.